# EUROPEAN PATENT SPECIFICATION

(11) **EP 3 426 501 B1**
(45) Date of publication and mention of the grant of the patent: **29.01.2020**
(21) Application number: 16710947.9
(22) Date of filing: 11.03.2016
(51) Int. Cl.: B60B 27/00, B60B 27/02, B60C 23/00, F16C 33/72

(54) **A BEARING ARRANGEMENT AND A METHOD FOR ASSEMBLING A BEARING ARRANGEMENT TO A HUB**
LAGERBAUGRUPPE UND VERFAHREN ZUR MONTAGE EINER LAGERBAUGRUPPE AN EINER NABE
AGENCEMENT DE PALIER ET PROCÉDÉ D'ASSEMBLAGE D'UN AGENCEMENT DE PALIER À UN MOYEU

(43) Date of publication of application: 16.01.2019
(73) Proprietor: Volvo Truck Corporation, 405 08 Göteborg (SE)
(72) Inventor: AUGUSTSSON, Kent, 517 37 Bollebygd (SE); DAGH, Ingemar, 413 18 Göteborg (SE)
(74) Representative: Zacco Sweden AB
(86) International application number: PCT/EP2016/055310
(87) International publication number: WO 2017/152996

(56) References cited:
- EP-A1- 0 993 559
- EP-A1- 1 440 823
- EP-A2- 2 952 365

## Description

### TECHNICAL FIELD

The present disclosure relates to a bearing arrangement and a method for assembling a bearing arrangement to a hub, according to the preamble of independent claims 1 and 15 and as known from document EP 0 993 559 B1. The bearing arrangement is adapted for a central tire inflation system, CTIS, and provided with a sealing device having an air passage. The sealing device is specifically adapted to be clamped between a portion of the hub and a portion of the bearing arrangement. It enables easy maintenance e.g. easy replacement of worn out parts such as the sealing device or portions thereof.

### BACKGROUND

A vehicle with an onboard inflating and deflating system to inflate or deflate one or more tires of the vehicle enables a single user, such as the driver of the vehicle, to inflate or deflate the tires of the vehicle from one location. Such systems are generally referred to as central inflation tire systems or CTIS. The systems generally include a pressurized air source providing pressurized air, air pipes for guiding the pressurized air to the associated tires and a sealing arrangement between the spindles and the hubs onto which the tires are arranged.

To improve the seal between the spindle and the hub, while at the same time maintaining a low friction between the rotating hub and the stationary spindle, bearings having air passages permitting pressurized air to pass there through are provided. The bearings are generally rather complex and expensive. They generally require lubricants to grease the roller elements and to rotate smoothly. Suitable lubricants are generally oil, grease or similar. At the same time, the air passage running through the bearing and the sealing arrangement is faced with the challenge of retaining the pressurized air from escaping. The sealing arrangement is further required to seal between a rotating part and a fixed part. It is easy to understand that the bearings having the sealing arrangement are very often vehicle specific in terms of that each vehicle requires small modifications of the bearing to maximize the performance of the sealing arrangement. Being relatively vehicle specific they are generally expensive.

Due to the stress the bearings and their associated sealing arrangements are subjected to they may need to be replaced sometimes due to wear. Maintenance is thus an important factor and especially how accessible the bearing and the associated sealing arrangement are becomes important. The published US patent no. US 5,080,156, in the name of J. A. Bartos, disclose a solution which was intended to provide a simplified configuration of a bearing arranged between a hub and a spindle. The solution however have drawbacks in terms of that it appears to still be rather complex to assemble or disassemble.

In the published European patent application No. EP 0,224,674 in the name of MAN Nutzfahrzeuge Gmbh, a pre-assembled bearing and seal arrangement is provided. Even so, the solution can be readily improved.

There is thus a need for improvements of the solutions presented in the known prior art.

### SUMMARY

An object is to provide a device, which device solves the mentioned drawbacks or at least reduces the drawbacks, or at least provides a useful alternative. It is further an object to provide a method which reduces at least some of the drawbacks, or at least provides a useful alternative. These objects are achieved by a device according to claim 1 and a method according to claim 15 respectively.

The objects are at least partly met by a bearing arrangement adapted to be positioned between a hub and a spindle. The bearing arrangement has a rotation axis. The bearing arrangement comprises an outer annular bearing member and roller elements. The bearing arrangement further comprises a sealing device comprising an air passage for pressurized air through the sealing device. A portion of the sealing device is adapted to be clamped between a portion of the hub and the outer annular bearing member of the bearing arrangement.

The bearing arrangement provides a simple bearing arrangement which is connectable with a second bearing arrangement to form a bearing for a hub and spindle. The bearing arrangement also is specifically advantageous for a hub and a spindle adapted for a central tyre inflation system CTIS. The bearing arrangement may be adapted to a CTIS and a vehicle comprising a CTIS. It is also within the boundaries of the present disclosure to provide a bearing arrangement and a hub for a vehicle having a CTIS or similar system.

The bearing arrangement enables an advantageous assembly and disassembly method for assembling or disassembling a bearing arrangement, and in the end a bearing with a hub and subsequently to assemble the hub with a spindle. The hub may of course be provided with a tire although a tire may be mounted at a later stage if desirable. The configuration of the bearing arrangement has been found to be extra good for grease based bearing arrangement. CTIS systems for grease based bearing arrangements are generally difficult as the grease is more sensitive for differences in air pressure which may arise as a function of the CTIS. If the grease is pushed out from the bearing arrangement, the lubricating function may be reduced and the bearing arrangement may be damaged. It has been found that the present bearing arrangement and method are particularly good for grease lubricated bearing arrangements, although they work well for oil lubrication as well.

The bearing arrangement is thus very useful to form a part of a bearing, as maintenance of the vehicle is simplified. It is simplified mainly in terms of that the maintenance of the hub, the bearing and bearing arrangement, and even the spindle, are simplified due to the easy assembly and disassembly method enabled by the bearing arrangement. It thus enables easy repair or changing of the sealing device and/or the elements forming a part of the bearing. It is also very advantageous when retrofitting a vehicle with a CTIS. It is thus an important vehicle after sales product. It also take up the load from the hub in a favourable manner, hence the bearing arrangement has good load bracing abilities.

According to an aspect, the bearing arrangement may advantageously comprise an inner annular bearing member, wherein the roller elements are positioned between the outer annular bearing arrangement and the inner annular bearing arrangement. A bearing arrangement not having an inner annular bearing member may be configured so that the roller elements are positioned directly adjacent a portion of the spindle after assembly. It has been found however that having an inner annular bearing member simplifies the assembly or disassembly even further.

According to an aspect, the sealing device may comprise an inner and an outer annular member axially facing one another, and an annular intermediate sealing arrangement positioned between the inner and the outer annular members delimiting the air passage for the pressurized air through the sealing device. The outer annular member provides support for the bearing when assembled. The annular intermediate sealing arrangement may seal against grease intrusion into the air passage while at the same time substantially prevent, or prevent, air from escaping the air passage.

According to an aspect, the inner and/or the outer annular member may have at least one aperture in fluid communication with the air passage. The inner and/or the outer annular member may be provided with at least one aperture to provide an air passage through the inner and/or the outer annular members providing an air passage between the spindle and the hub after assembly. Two or more air apertures, such as three or more, four or more are also possible.

According to an aspect, the outer annular member may be a rotatable outer annular member, and the inner annular member may be a stationary inner annular member. The outer annular member of the sealing device may thus be adapted to rotate synchronously with the hub and the outer annular bearing member after assembly therewith.

The annular intermediate sealing arrangement, or portions thereof, may be adapted to rotate synchronously with the outer annular member.

According to an aspect, the portion of the sealing device is an outer annular member of the sealing device. The outer annular member of the sealing device may thus be specifically adapted to be clamped between the outer annular bearing member and a portion of the hub. The clamping force used is advantageously imparted in parallel with the rotation axis about which the bearing arrangement and the hub is adapted to rotate. The outer annular member of the sealing device is thus adapted to withstand such clamping forces at least in that direction.

The outer annular bearing member may be positioned adjacent the outer annular member of the sealing device. The outer annular bearing member, intermediate members may be positioned between the outer annular bearing member and the outer annular member of the sealing device. It has been found advantageous however to position the outer annular bearing member directly against the outer annular member of the sealing device. It simplifies the assembly and reduces the amount of the individual components to be used.

According to an aspect, the sealing device, and preferably the outer annular member of the sealing device, may comprise a hub receiving surface and an outer annular bearing member receiving surface, wherein the hub receiving surface and the annular receiving surface of the sealing device are substantially parallel, or parallel, with respect to each other.

The hub receiving surface and the annular bearing member receiving surface of the sealing device may be substantially perpendicular, or perpendicular, with respect to the rotation axis.

According to an aspect, the portion of the sealing device may be clamped between a portion of the hub and the outer annular member of the sealing device with a clamping force in a direction substantially parallel, or parallel, with the rotation axis of the bearing arrangement.

According to the invention, the bearing arrangement is a first bearing arrangement adapted to be connected to a second bearing arrangement. The second bearing arrangement comprises at least an outer annular bearing member and roller elements. The second bearing arrangement preferably additionally has an inner annular bearing member, wherein the roller elements are positioned between the outer annular bearing member and the inner annular bearing member.

The first and the second bearing arrangements are connected via a snap-on connection, preferably via a ring member. It is advantageously if the inner annular bearing members are connected together as this provides a secure arrangement. Optionally or additionally, the first and the second bearing arrangement can be held together, i.e. in place, by being connected to a portion of the hub and/or the spindle.

The sealing device may be arranged substantially between the roller elements of the first and the second bearing arrangements after assembly. It may further be positioned between the outer annular bearing members of the first and the second bearing arrangement.

The roller elements are preferably tapered roller elements although other roller elements are possible such as balls.

It is further an object to provide a central tire inflation system for a vehicle comprising at least one bearing arrangement, and preferably at least a first and a second bearing arrangement as described herein.

It is further an object to provide a vehicle comprising at least one bearing arrangement, preferably a first and a second bearing arrangement as described herein. It is also an object to provide a hub comprising a first bearing arrangement and preferably a second bearing arrangement.

According to a second aspect, the object is at least partly achieved by a method according to claim 15. The object is at least partly achieved by a method for assembling a bearing arrangement to a hub. The bearing arrangement has a rotation axis. The bearing arrangement comprises an outer annular bearing member and roller elements. The bearing arrangement further comprises a sealing device comprising an air passage for pressurized air through the sealing device. The method comprising the steps of mounting the bearing arrangement to the hub from a first direction, whereby the sealing device is clamped between a portion of the hub and the outer annular bearing member of the bearing arrangement.

The method enables easy maintenance and replacement of spare parts.

The bearing arrangement may advantageously comprise an inner annular bearing member, wherein the roller elements are positioned between the outer annular bearing arrangement and the inner annular bearing arrangement.

The method may further comprise the step of mounting a second bearing arrangement to the hub from a second direction which direction is opposite to the first direction. The second bearing arrangement comprises an outer annular bearing member, roller elements, and optionally an inner annular bearing member.

The method may further comprise the step of pre-assembling the outer annular bearing member, the roller elements and optionally the inner annular bearing member, and the sealing device together before mounting them to the hub from the first direction.

The pre-assembly step simplifies the assembly method and enables an even easier maintenance and replacement of spare parts should that be necessary as the outer annular bearing member and the associated roller elements can be assembled and disassembled simultaneously from the hub together with the sealing device.

### BRIEF DESCRIPTION OF THE DRAWINGS

Non-limiting embodiments of the present disclosure will be described in greater detail with reference to the accompanying drawings in which;
figure 1 shows cross section of a spindle, a hub, and a bearing comprising a bearing arrangement;
figure 2 shows the bearing arrangement of figure 1 in greater detail;
figure 3 shows the sealing device of the bearing device of figure 2 and;
figure 4 shows an exploded cross sectional view of the hub and a first and a second bearing arrangement.

### DETAILED DESCRIPTION

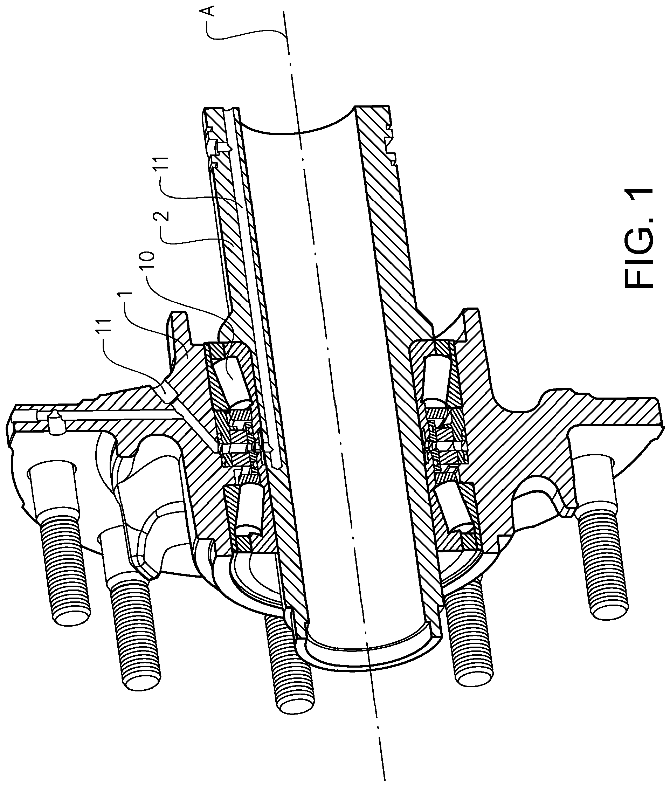

Figure 1 shows a cross section of a portion of a hub 1 and spindle 2 for a vehicle (not shown) such as a wheel loader, truck, bus or similar. In figure 1 a hub 1 and a spindle 2 for a wheel loader are shown. The hub 1 and spindle 2 comprises a central tire inflation system, CTIS, which enables the tire (not shown) on each hub to be inflated or deflated centrally and even during use of the vehicle. A rotation axis A is further indicated with a dashed line in figure 1.

A bearing arrangement 10 is positioned between the hub 1 and the spindle 2. The bearing arrangement 10, the hub 1 and the spindle 2 are specifically adapted to enable pressurized air to pass there through via an air channel 11. The bearing arrangement 10 is in the shown embodiment connected to a second bearing arrangement 10' to form a modular bearing, or a complete bearing, as will be described in greater detail below. The modular bearing is grease lubricated providing an efficient and smooth rotation about the rotation axis A.

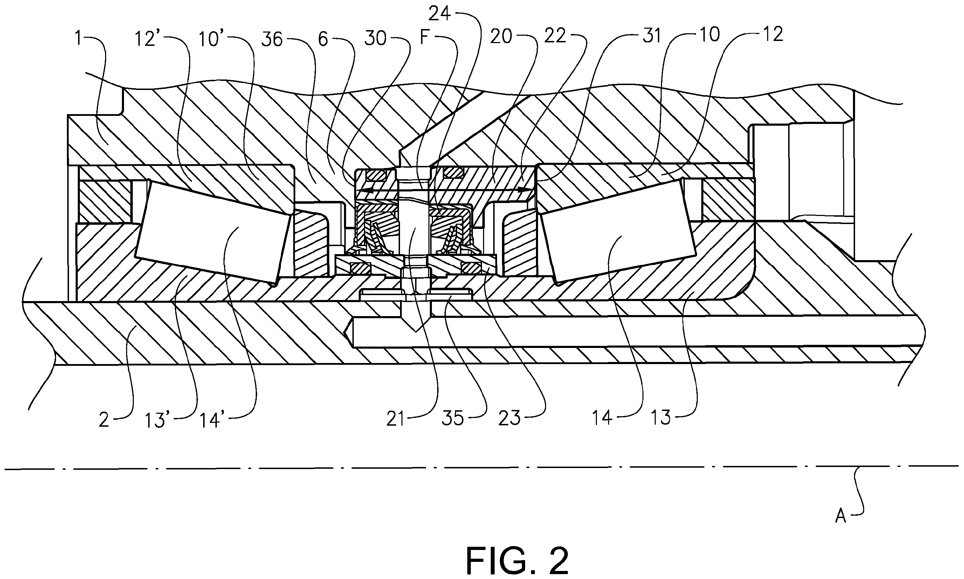

Figure 2 shows a portion of the bearing arrangement 10 with a cross sectional view in greater detail. The bearing arrangement 10 comprises an outer annular bearing member 12, an inner annular bearing member 13 and roller elements 14 there between. In other words, the bearing arrangement 10 has an outer race and an inner race and roller elements there between. The roller elements 14 may be balls or cylinder elements, in the shown embodiment the roller elements 14 are tapered cylinder elements. It further comprises a sealing device 20. The sealing device 20 has an air passage 21 permitting pressurized air to run through the sealing device 20 and which provides fluid communication between the spindle 2 and the hub 1. It thus forms a part of the air channel 11 between the hub 1 and the spindle 2.

In an embodiment, the roller elements 14 may brace directly against a portion of the spindle 2, but it is advantageous to have an inner annular bearing member as shown. The inner annular bearing member 13 is stationary in terms of that it is not intended to rotate about the rotation axis A during use of the vehicle. It is thus fixed with respect to the spindle 2. The outer annular bearing member 12 is a rotateable annular bearing member in terms of that it rotates about the rotation axis A during use of the vehicle.

The sealing device 20 is adapted to be clamped between a portion of the hub 1 and the outer annular bearing member 12 of the bearing arrangement 10 after assembly therewith. As indicated in figure 2. The clamping force is substantially parallel, preferably parallel, with the rotation axis A. The sealing device 20 is thus provided with a hub receiving surface 30 adapted to brace against a portion of the hub 1 after assembly and an opposing second surface 31 adapted to be adjacent the outer annular bearing member 12. It has been found that this enables a very advantageous assembly method and simplifies maintenance and repair work on the vehicle should such work be necessary. The configuration is very advantageous as the inner annular bearing member 13 does not take up any load in the direction of the rotation axis A from the hub. Instead, the outer annular bearing member 12 takes up the load in the direction of the rotation axis A via the hub. The bearing arrangement 10 keeps the sealing device 20 in position in a geometrical locked manner.

The sealing device 20 comprises an outer and an inner annular member 22, 23 axially facing one another, and an annular intermediate sealing arrangement 24 positioned between the outer and the inner annular members 22, 23. The annular intermediate sealing arrangement 24 delimits the air passage 21 for the pressurized air through the sealing device 10. It is adapted to retain the pressurized air from escaping while at the same time preventing lubricating grease from entering the air passage 21. Apertures in the outer and the inner annular members 22, 23 permit access for the pressurized air to the air passage 21 of the sealing device 20.

The outer annular member of 22 of the sealing device 20 is in the shown embodiment clamped between a portion of the hub 1 and the outer annular bearing member 12. The portion of the hub 1 is a circumferential flange 6 which extends towards the rotation axis A. A pressure force may thus be applied there between. As can be noticed, a portion of the annular intermediate sealing arrangement 24 is clamped between a portion of the hub 1 and a portion of the outer annular member 22 of the sealing device 20. As can be noticed, the outer annular member 22 of the sealing device 20 comprises a support flange 25 extending from the surface of the outer annular member 22 in a direction towards the inner annular member 23 and in a direction perpendicular to the rotation axis A. As the outer annular member 22 of the sealing device 20 is pressed against the portion of the hub 1 positioned adjacent the hub receiving surface 30 of the outer annular member 22, annular intermediate sealing arrangement 24 is also held in position by the outer annular member 22 of the sealing device 20.

The second bearing arrangement 10' comprises an annular outer bearing member 12', an inner annular bearing member 13' and roller elements 14' there between. The first and the second bearing arrangement 10, 10' are positioned with respect to each other so as to form a complete bearing. They may be connected together as in the shown embodiment with a snap-on connection. The snap-on connection is in the shown embodiment formed by a connection ring 35. The first and the second bearing arrangement 10, 10' may however be retained to each other by other means such as by a pressure force imparted by surrounding elements, by screws, bolts, pins or the like. The first and the second bearing arrangements 10, 10' form together a modular bearing in terms of that they are adapted to cooperate with the same hub and on the same spindle. Although the second bearing arrangement 10' is not provided with a sealing device as the first bearing arrangement 10, the second bearing arrangement 10' may equally be provided with a sealing device similar or identical with the sealing device of the first bearing arrangement 10. The first and the second bearing arrangement 10, 10' have the same dimensions, or at least substantially the same dimensions. They are further symmetrical and as such easy to manufacture. The shape and size of the annular outer bearing member 12 of the first bearing arrangement 10 are similar, or identical, to the annular outer bearing member 12' of the second bearing arrangement 10'. In the same manner, the inner annular bearing member 13 of the first bearing arrangement 10 is similar, or identical, to the inner annular bearing member 13' of the second bearing arrangement 10'. They can be described as being mirror images to each other, as they are facing towards each other as can be clearly seen in figure 2, although small deviations may exceptionally occur.

As can be seen in figure 2, the sealing device 20 and especially the outer annular member 22 of the sealing device are in direct contact with the hub 1. As such, the sealing device 20 is also subjected to a radial force imparted by the hub 1 to the spindle 2. To rigidly support the sealing device 20, the sealing device 20 may be provided with an additional support element to support the sealing device in a radial direction.

As can further be gleaned from figure 2, the hub 1 has a portion which extends into a cavity 36 formed between the sealing device and the second bearing arrangement 10'. The complete bearing, i.e. the first and the second bearing arrangement 10, 10' is thus provided with a cavity 36 for receiving a portion of the hub 1 against which the outer annular member 22 of the sealing device 20 may be braced.

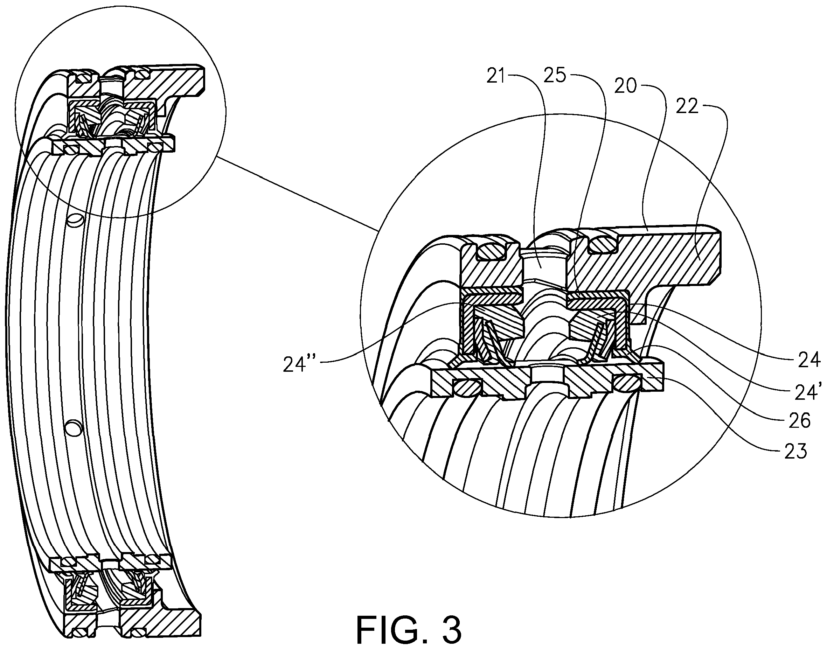

Figure 3 shows the sealing device 20 in greater detail. Figure 3 shows the outer annular member 22, the inner annular member 23, the intermediate sealing arrangement 24 and the air passage 21. The intermediate sealing arrangement 24 of the sealing device 20 is in the shown embodiment formed by two distinct components 24', 24" opposing and as a mirror image to each other. It may however be formed by one individual component having holes permitting pressurized air to pass. Each of the distinct components 24', 24" of the annular intermediate sealing arrangement 24 has a base portion 25 and a flange portion 26. Each base portion 25 is positioned adjacent the outer annular member 22 of the sealing device 20 and the flange portion 26 extend in a direction towards the opposing inner annular member 23 of the sealing device 23. The flange portion 25 is preferably perpendicular to the base portion 25 of the distinct component 24' of the intermediate sealing arrangement 24. The flange portions 26 are provided with gas and grease sealing portions. The base and the flange portions 25, 26 may further be coated with a plastic or rubber material to increase the sealing properties. A suitable plastic material can be Polytetrafluoroethylene, PTFE, for example.

As can be seen, the flange portions 26 of the distinct components 24', 24" are positioned in the proximity of the associated bearing arrangement, i.e. the leading and the trailing edge of the inner and the outer annular members 22, 23. Between the flange portions 26 of the distinct components 24', 24" is thus plenty of room for the gas and grease sealing portions.

In general terms, a bearing arrangement adapted to be positioned between a spindle and a hub and adapted to permit pressurized air to pass there through via an air passage, a sealing device having an annular intermediate sealing arrangement, wherein the annular intermediate sealing arrangement is adapted to be positioned against a portion of the hub after assembly with the hub. The bearing arrangement is connectable to a second bearing arrangement to form a complete bearing.

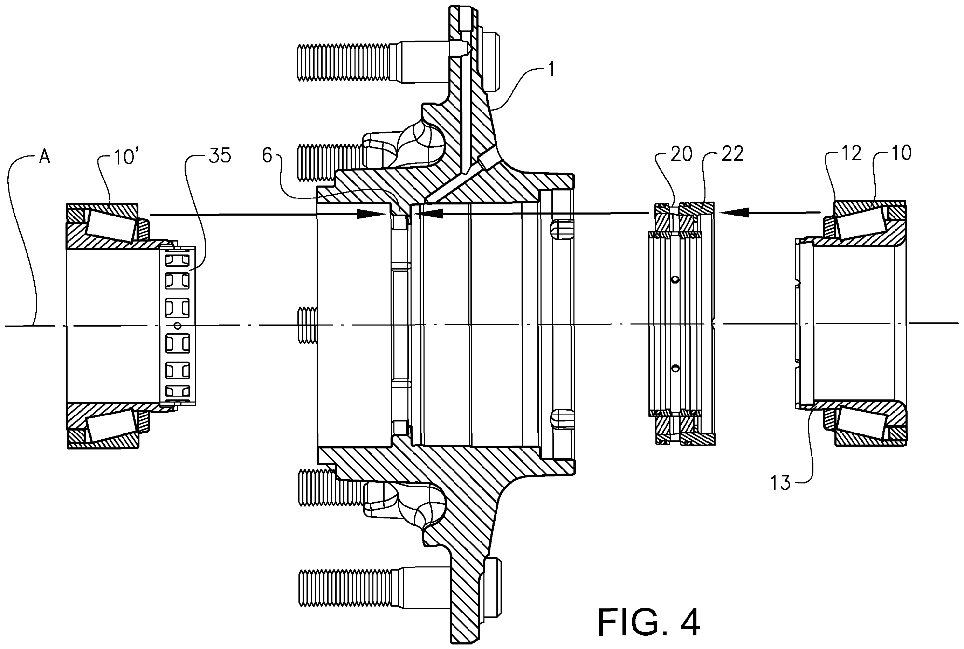

Figure 4 shows the first and the second bearing arrangement 10, 10', the sealing device 20, and the hub in an exploded view. With reference to figure 4, a method for assembling a bearing arrangement to a hub, and optionally to a spindle, will be described in greater detail. The rotation axis A is also shown in figure 4.

The bearing arrangement 10 is initially assembled by threading or sliding the sealing device 20 onto a portion of the inner annular bearing member 13. The outer annular member of the sealing device 20 is positioned adjacent the outer annular bearing member 12. The sealing device 20 can thus be pre-assembled with the outer annular bearing member 12, the inner annular bearing member 13 and the roller elements 14 there between. The bearing arrangement 10 is thereafter inserted into the hub 1 in a first direction parallel with the rotation axis A until the circumferential flange 6 of the hub 1 abuts the outer annular member 22 of the sealing device. The sealing device 20 is thus being clamped between a portion of the hub 1 and a portion of the outer annular bearing member 12.

The bearing arrangement 10 is pressed into the hub with a force of from 40-120 kN, preferably 60-100 kN, more preferably with about 80 kN.

The second bearing arrangement 10' comprising of an outer annular bearing member 12', an inner annular bearing member 13' and roller elements 14' there between are inserted into the hub 1 along a second direction opposite to the first direction. The first bearing arrangement 10 and the second bearing arrangement 10' are partly separated by the circumferential flange 6 of the hub 1. The hub 1 together with the complete bearing can thereafter be threaded or slid onto the spindle of the vehicle. Disassembling is preferably made in reversed order.

As an option, the second bearing arrangement 10' may be assembled firstly to the hub 1 in a first direction, and a pre-assembled first bearing arrangement 10 may be assembled subsequently thereafter to the hub 1 in a direction opposite to the first direction. Optionally the hub 1 with the first and the second bearing arrangements 10, 10' assembled thereto are positioned onto the spindle. Disassembling is preferably made in reversed order.

The bearing arrangement maybe adapted to fit a spindle having a diameter of from 40-200 mm, preferably 60-200 mm, more preferably 80-200 mm. The diameter of the spindle in this case is 94 mm. The first bearing arrangement and the second bearing arrangement may have the same diameter, and thus be adapted to fit a spindle with one diameter at least at the bearing arrangement receiving portion of the spindle.

It should be noted that the sealing device 20 when arranged in a clamping manner to the portion of the hub 1 can be clamped with different amount of forces dependent on the desired performance of the complete bearing.

It is to be understood that the present disclosure is not limited to the embodiments described above and illustrated in the drawings; rather, the skilled person will recognize that many changes and modifications may be made within the scope of the appended claims.

## Claims

1. A bearing arrangement (10) adapted to be positioned between a hub (1) and a spindle (2), said bearing arrangement (10) having a rotation axis (A), said bearing arrangement (10) comprising an outer annular bearing member (12) and roller elements (14), said bearing arrangement (10) further comprising a sealing device (20) comprising an air passage (21) for pressurized air through said sealing device (20), wherein a portion of said sealing device (20) is adapted to be clamped between a portion of said hub (1) and said outer annular bearing member (12) of said bearing arrangement (10), wherein said bearing arrangement (10) is a first bearing arrangement (10) adapted to be connected to a second bearing arrangement (10'), said second bearing arrangement comprises at least an outer annular bearing member (12') and roller elements (14'), **characterized in that** said first and said second bearing arrangements (10, 10') are connected via a snap-on connection, preferably via a ring member (35).

2. The bearing arrangement (10) according to claim 1, wherein said sealing device (20) comprises an outer and an inner annular member (22, 23) facing one another, and an annular intermediate sealing arrangement (24) positioned between said inner and said outer annular members (22, 23) delimiting said air passage (21) for said pressurized air through said sealing device (10).

3. The bearing arrangement (10) according to claim 2, wherein said inner and said outer annular member (22, 23) has at least one aperture in fluid communication with said air passage (21).

4. The bearing arrangement (10) according to claim 2 or 3, wherein said outer annular member (22) is a rotatable outer annular member, and said inner annular member (23) is a stationary inner annular member.

5. The bearing arrangement (10) according to any one of the claims 2-4, wherein said annular intermediate sealing arrangement (24) is adapted to rotate synchronously with said outer annular member (22).

6. The bearing arrangement (10) according to any one of the preceding claims, wherein said portion of said sealing device (20) which is adapted to be clamped is an outer annular member (22) of said sealing device (20).

7. The bearing arrangement (10) according to claim 6, wherein said outer annular bearing member (12) is positioned adjacent said outer annular member (22) of said sealing device (20).

8. The bearing arrangement (10) according to any one of the preceding claims, wherein said sealing device (20) comprises a hub receiving surface (30) and an outer annular bearing member receiving surface (31), wherein said hub receiving surface (30) and said annular receiving surface (31) of said sealing device (20) are substantially parallel, or parallel, with respect to each other.

9. The bearing arrangement (10) according to claim 8, wherein said hub receiving surface (30) and said annular bearing member receiving surface (31) of said sealing device (20) are substantially perpendicular, or perpendicular, with respect to said rotation axis (A).

10. The bearing arrangement (10) according to any one of the preceding claims, wherein said portion of said sealing device (20) which is adapted to be clamped is clamped between a portion of said hub (1) and said outer annular member (22) of said sealing device (20) with a clamping force in a direction substantially parallel, or parallel, with said rotation axis (A) of said bearing arrangement (10).

11. The bearing arrangement (10) according to any one of the preceding claims, wherein said sealing device (20) is arranged substantially between said roller elements (14, 14') of said first and said second bearing arrangements (10, 10') after assembly.

12. The bearing arrangement (10) according to any one of the preceding claims, wherein said roller elements (14) are tapered.

13. A central tire inflation system for a vehicle comprising at least one bearing arrangement (10) according to any one of the preceding claims.

14. A vehicle comprising at least one bearing arrangement (10) according to any one of the preceding claims.

15. A method for assembling a bearing arrangement (10) to a hub (1), said bearing arrangement (10) having a rotation axis (A), said bearing arrangement (10) comprising an outer annular bearing member (12) and roller elements (14), said bearing arrangement (10) further comprising a sealing device (20) comprising an air passage (21) for pressurized air to pass through said sealing device (20), said method comprising the step of;
- mounting said bearing arrangement (10) to said hub (2) from a first direction, whereby said sealing device (20) is clamped between a portion of said hub (1) and said outer annular bearing member (12) of said bearing arrangement (10),
**characterized in that** said method further comprising the step of; mounting a second bearing arrangement (10') to said hub (1) from a second direction which direction is opposite to said first direction and connecting together said bearing arrangement (10) and said second bearing arrangement (10') with a snap-on connection.

16. The method according to claim 15, said method comprising the step of;
- pre-assembling said outer annular bearing member (12), said roller elements (14) and said sealing device (20) before mounting them to said hub (1) from said first direction.

17. The method according to the claims 15 or 16, said method comprising the step of; mounting said hub (1), said first and said second bearing arrangement (10, 10') in an assembled state, to a spindle of a vehicle.

## Patentansprüche

1. Lageranordnung (10), die zum Positionieren zwischen einer Nabe (1) und einer Spindel (2) ausgelegt ist, wobei die Lageranordnung (10) eine Drehachse (A) aufweist, wobei die Lageranordnung (10) ein äußeres ringförmiges Lagerelement (12) und Rollenelemente (14) umfasst, wobei die Lageranordnung (10) ferner eine Dichtungsanordnung (20) umfasst, die einen Luftdurchgang (21) für Druckluft durch die Dichtungsanordnung (20) hindurch umfasst, wobei ein Abschnitt der Dichtungsanordnung (20) ausgelegt ist, um zwischen einem Abschnitt der Nabe (1) und dem äußeren ringförmigen Lagerelement (12) der Lageranordnung (10) eingeklemmt zu werden, wobei die Lageranordnung (10) eine erste Lageranordnung (10) ist, die ausgelegt ist, um mit einer zweiten Lageranordnung (10') verbunden zu werden, wobei die zweite Lageranordnung zumindest ein äußeres ringförmiges Lagerelement (12') und Rollenelemente (14') umfasst, **dadurch gekennzeichnet, dass** die ersten und die zweiten Lageranordnungen (10, 10') über eine Schnappverbindung, vorzugsweise über ein Ringelement (35), miteinander verbunden sind.

2. Lageranordnung (10) nach Anspruch 1, die Dichtungsanordnung (20) umfassend ein äußeres und ein inneres ringförmiges Element (22, 23), die einander zugewandt sind, und eine ringförmige Zwischendichtungsanordnung (24), die zwischen dem inneren und dem äußeren ringförmigen Element (22, 23) angeordnet ist und den Luftdurchgang (21) für die Druckluft durch die Dichtungsanordnung (10) hindurch begrenzt.

3. Lageranordnung (10) nach Anspruch 2, wobei das innere und das äußere ringförmige Element (22, 23) zumindest eine Öffnung in Fluidverbindung mit dem Luftdurchgang (21) aufweisen.

4. Lageranordnung (10) nach Anspruch 2 oder 3, wobei das äußere ringförmige Element (22) ein drehbares äußeres ringförmiges Element ist, und das innere ringförmige Element (23) ein ortsfestes inneres ringförmiges Element ist.

5. Lageranordnung (10) nach einem der Ansprüche 2-4, wobei die ringförmige Zwischendichtungsanordnung (24) ausgelegt ist, um mit dem äußeren ringförmigen Element (22) synchron zu drehen.

6. Lageranordnung (10) nach einem der vorgehenden Ansprüche, wobei der zum Einklemmen vorgesehene Abschnitt der Dichtungsanordnung (20) ein äußeres ringförmiges Element (22) der Dichtungsanordnung (20) ist.

7. Lageranordnung (10) nach Anspruch 6, wobei das äußere ringförmige Lagerelement (12) an das äußere ringförmige Element (22) der Dichtungsanordnung (20) angrenzend angeordnet ist.

8. Lageranordnung (10) nach einem der vorgehenden Ansprüche, wobei die Dichtungsanordnung (20) eine Nabenaufnahmefläche (30) und eine äußere ringförmige Lagerelementaufnahmefläche (31) umfasst, wobei die Nabenaufnahmefläche (30) und die ringförmige Aufnahmefläche (31) der Dichtungsanordnung (20) im Wesentlichen parallel oder relativ zueinander parallel sind.

9. Lageranordnung (10) nach Anspruch 8, wobei die Nabenaufnahmefläche (30) und die ringförmige Lagerelementaufnahmefläche (31) der Dichtungsanordnung (20) im Wesentlichen senkrecht oder relativ zur Drehachse (A) senkrecht sind.

10. Lageranordnung (10) nach einem der vorgehenden Ansprüche, wobei der zum Einklemmen vorgesehene Abschnitt der Dichtungsanordnung (20) zwischen einem Abschnitt der Nabe (1) und dem äußeren ringförmigen Element (22) der Dichtungsanordnung (20) mit einer Klemmkraft in einer Richtung im Wesentlichen parallel, oder parallel, mit der Drehachse (A) der Lageranordnung (10) eingeklemmt wird.

11. Lageranordnung (10) nach einem der vorgehenden Ansprüche, wobei die Dichtungsanordnung (20) nach der Montage im Wesentlichen zwischen den Rollenelementen (14, 14') der ersten und der zweiten Lageranordnung (10, 10') angeordnet ist.

12. Lageranordnung (10) nach einem der vorgehenden Ansprüche, wobei die Rollenelemente (14) verjüngt sind.

13. Zentrale Reifendruckregelanlage für ein Fahrzeug umfassend mindestens eine Lageranordnung (10) nach einem der vorgehenden Ansprüche.

14. Fahrzeug umfassend mindestens eine Lageranordnung (10) nach einem der vorgehenden Ansprüche.

15. Verfahren zur Montage einer Lageranordnung (10) an einer Nabe (1), wobei die Lageranordnung (10) eine Drehachse (A) aufweist, wobei die Lageranordnung (10) ein äußeres ringförmiges Lagerelement (12) und Rollenelemente (14) umfasst, wobei die Lageranordnung (10) ferner eine Dichtungsanordnung (20) umfasst, die einen Luftdurchgang (21) für das Durchströmen von Druckluft durch die Dichtungsanordnung (20) hindurch umfasst, wobei das Verfahren den folgenden Schritt umfasst;
- Montage der Lageranordnung (10) an der Nabe (2) aus einer ersten Richtung, wobei die Dichtungsanordnung (20) zwischen einem Abschnitt der Nabe (1) und dem äußeren ringförmigen Lagerelement (12) der Lageranordnung (10) eingeklemmt wird,
**dadurch gekennzeichnet, dass** das Verfahren ferner den folgenden Schritt umfasst; Montieren einer zweiten Lageranordnung (10') an der Nabe (1) aus einer zur ersten Richtung entgegengesetzten zweiten Richtung und Verbinden der Lageranordnung (10) und der zweiten Lageranordnung (10') miteinander durch eine Schnappverbindung.

16. Verfahren nach Anspruch 15, wobei das Verfahren den folgenden Schritt umfasst;
- Vormontage des äußeren ringförmigen Lagerelements (12), der Rollenelemente (14) und der Dichtungsanordnung (20) vor deren Montage an der Nabe (1) aus der ersten Richtung.

17. Verfahren nach den Ansprüchen 15 oder 16, wobei das Verfahren den folgenden Schritt umfasst; Montage der Nabe (1), der ersten und der zweiten Lageranordnung (10, 10') in montiertem Zustand an einer Spindel eines Fahrzeugs.

## Revendications

1. Agencement de palier (10) adapté pour être positionné entre un moyeu (1) et une broche (2), ledit agencement de palier (10) ayant un axe de rotation (A), ledit agencement de palier (10) comprenant un élément de palier annulaire extérieur (12) et des éléments de roulement (14), ledit agencement de palier (10) comprenant en outre un dispositif d'étanchéité (20) comprenant un passage d'air (21) pour l'air sous pression à travers ledit dispositif d'étanchéité (20), une partie dudit dispositif d'étanchéité (20) étant adapté pour être serré entre une partie dudit moyeu (1) et ledit élément de palier annulaire extérieur (12) dudit agencement de palier (10), ledit agencement de palier (10) étant un premier agencement de palier (10) adapté de manière à être raccordé à un deuxième agencement de palier (10'), ledit deuxième agencement de palier comprenant au moins un élément porteur annulaire extérieur (12') et des éléments roulants (14'), **caractérisé en ce que** lesdits premier et deuxième agencements de palier (10, 10') sont raccordés via une connexion par encliquetage, de préférence via un élément annulaire (35).

2. Agencement de palier (10) selon la revendication 1, dans lequel ledit dispositif d'étanchéité (20) comprend un élément annulaire extérieur et un élément annulaire intérieur (22, 23) se faisant face, et un agencement d'étanchéité annulaire intermédiaire (24) positionné entre lesdits éléments annulaires intérieur et extérieur (22, 23) délimitant ledit passage d'air (21) pour ledit air sous pression à travers ledit dispositif d'étanchéité (10).

3. Agencement de palier (10) selon la revendication 2, dans lequel lesdits éléments annulaires intérieur et extérieur (22, 23) présentent au moins une ouverture en communication fluidique avec ledit passage d'air (21).

4. Agencement de palier (10) selon la revendication 2 ou 3, dans lequel ledit élément annulaire extérieur (22) est un élément annulaire extérieur rotatif, et ledit élément annulaire intérieur (23) est un élément annulaire intérieur stationnaire.

5. Agencement de palier (10) selon l'une quelconque des revendications 2 à 4, dans lequel ledit agencement d'étanchéité intermédiaire annulaire (24) est adapté pour tourner de manière synchrone avec ledit élément annulaire extérieur (22).

6. Agencement de palier (10) selon l'une quelconque des revendications précédentes, dans lequel ladite partie dudit dispositif d'étanchéité (20) qui est adaptée pour être serrée est un élément annulaire extérieur (22) dudit dispositif d'étanchéité (20).

7. Agencement de palier (10) selon la revendication 6, dans lequel ledit élément de palier annulaire extérieur (12) est positionné de manière adjacente audit élément annulaire extérieur (22) dudit dispositif d'étanchéité (20).

8. Agencement de palier (10) selon l'une quelconque des revendications précédentes, dans lequel ledit dispositif d'étanchéité (20) comprend une surface de réception de moyeu (30) et une surface de réception d'élément de palier annulaire extérieur (31), ladite surface de réception de moyeu (30) et ladite surface de réception annulaire (31) dudit dispositif d'étanchéité (20) étant essentiellement parallèles, ou parallèles, l'une par rapport à l'autre.

9. Agencement de palier (10) selon la revendication 8, dans lequel ladite surface de réception de moyeu (30) et ladite surface de réception d'élément de palier annulaire (31) dudit dispositif d'étanchéité (20) sont essentiellement perpendiculaires, ou perpendiculaires, par rapport audit axe de rotation (A).

10. Agencement de palier (10) selon l'une quelconque des revendications précédentes, dans lequel ladite partie dudit dispositif d'étanchéité (20) qui est adaptée pour être serrée, est serrée entre une partie dudit moyeu (1) et ledit élément annulaire extérieur (22) dudit dispositif d'étanchéité (20) avec une force de serrage dans une direction essentiellement parallèle, ou parallèle, audit axe de rotation (A) dudit agencement de palier (10).

11. Agencement de palier (10) selon l'une quelconque des revendications précédentes, dans lequel ledit dispositif d'étanchéité (20) est agencé essentiellement entre lesdits éléments de rouleau (14, 14') desdits premier et deuxième agencements de palier (10, 10') après assemblage.

12. Agencement de palier (10) selon l'une quelconque des revendications précédentes, dans lequel lesdits éléments de rouleau (14) sont coniques.

13. Système de gonflage central de pneu pour véhicule comprenant au moins un agencement de palier (10) selon l'une quelconque des revendications précédentes.

14. Véhicule comprenant au moins un agencement de palier (10) selon l'une quelconque des revendications précédentes.

15. Procédé d'assemblage d'un agencement de palier (10) sur un moyeu (1), ledit agencement de palier (10) ayant un axe de rotation (A), ledit agencement de palier (10) comprenant un élément de palier annulaire extérieur (12) et des éléments de roulement (14), ledit agencement de palier (10) comprenant en outre un dispositif d'étanchéité (20) comprenant un passage d'air (21) pour l'air sous pression de passer à travers ledit dispositif d'étanchéité (20), ledit procédé comprenant l'étape consistant à :
- monter ledit agencement de palier (10) sur ledit moyeu (2) à partir d'une première direction, ledit dispositif d'étanchéité (20) étant serré entre une partie dudit moyeu (1) et ledit élément de palier annulaire extérieur (12) dudit agencement de palier (10), **caractérisé en ce que** ledit procédé comprenant en outre l'étape consistant à ; monter un deuxième agencement de palier (10') sur ledit moyeu (1) à partir d'une deuxième direction, cette direction étant opposée à ladite première direction et raccordant ledit agencement de palier (10) et ledit deuxième agencement de palier (10') l'un à l'autre via une connexion par encliquetage.

16. Procédé selon la revendication 15, ledit procédé comprenant l'étape consistant à :
- pré-assembler ledit élément de palier annulaire extérieur (12), lesdits éléments de rouleau (14) et ledit dispositif d'étanchéité (20) avant de les monter sur ledit moyeu (1) à partir de ladite première direction.

17. Procédé selon les revendications 15 ou 16, ledit procédé comprenant l'étape consistant à; monter ledit moyeu (1), ledit premier et ledit deuxième agencement de palier (10, 10 ') dans un état assemblé, sur une broche d'un véhicule.
